(19) Europäisches Patentamt
European Patent Office
Office européen des brevets

(11) **EP 3 905 097 A1**

(12) **EUROPÄISCHE PATENTANMELDUNG**

(43) Veröffentlichungstag:
**03.11.2021 Patentblatt 2021/44**

(51) Int Cl.:
***G06F 40/295*** *(2020.01)*

(21) Anmeldenummer: **20172432.5**

(22) Anmeldetag: **30.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Robert Bosch GmbH**
**70442 Stuttgart (DE)**

(72) Erfinder:
• **Stroetgen, Jannik**
**76135 Karlsruhe (DE)**
• **Adel-Vu, Heike**
**70565 Stuttgart (DE)**
• **Lange, Lukas**
**75177 Pforzheim (DE)**

Bemerkungen:
Geänderte Patentansprüche gemäss Regel 137(2) EPÜ.

(54) **VORRICHTUNG UND VERFAHREN ZUM BESTIMMEN EINES KNOWLEDGE GRAPH**

(57) Vorrichtung (100) und Verfahren zur Bestimmung eines Knowledge Graph, wobei für ein erstes Embedding für ein Wort (306) mit einer Funktion (308) ein zweites Embedding ($x_i$) bestimmt wird, wobei für das zweite Embedding mit einem ersten Klassifizierer ($C$) eine erste Klassifizierung bestimmt wird, die definiert, ob das Wort (306) eine Entität für den Knowledge Graph ist oder nicht, oder die definiert welcher Entität oder welchem Typ von Entität für den Knowledge Graph das Wort (306) im Knowledge Graph zuzuordnen ist, wobei für das zweite Embedding mit einem zweiten Klassifizierer eine zweite Klassifizierung bestimmt wird, die definiert, welchem Typ von Embeddings aus einer Vielzahl von Typen von Embeddings das zweite Embedding zuzuordnen ist, wobei in einem Training wenigstens ein Parameter für die Funktion (308) abhängig von wenigstens einem Gradienten für das Training des ersten Klassifizierer ($C$) und abhängig von wenigstens einem Gradienten für das Training des zweiten Klassifizierer trainiert wird.

Fig. 3

EP 3 905 097 A1

**Beschreibung**

Stand der Technik

Die Erfindung geht aus von einer Vorrichtung und einem Verfahren zum Bestimmen eines Knowledge Graph.

Unter einem Knowledge Graph wird in wissensbasierten Systemen eine strukturierte Speicherung von Wissen in Form eines Graphs verstanden. Knowledge Graphen umfassen Entitäten und geben Relationen zwischen Entitäten wieder. Entitäten definieren Knoten des Knowledge Graphs. Eine Relation ist als Kante zwischen zwei Knoten definiert.

Wünschenswert ist es, ein Möglichkeit zu schaffen, einen Knowledge-Graphen zu füllen.

Offenbarung der Erfindung

Dies wird durch eine Vorrichtung und ein Verfahren zur Bestimmung eines Knowledge Graph gemäß der unabhängigen Ansprüche erreicht. Der Knowledge-Graph umfasst Entitäten und Relationen. Zur Bestimmung des Knowledge-Graph wird mit einem Modell für ein Wort eine Klassifikationsentscheidung darüber getroffen, welche Entität in den Knowledge-Graph geschrieben werden soll oder ob dafür eine Entität in den Knowledge-Graph geschrieben werden soll, oder nicht.

Das Verfahren zur Bestimmung eines Knowledge Graph sieht vor, dass für ein erstes Embedding für ein Wort mit einer Funktion ein zweites Embedding bestimmt wird, wobei für das zweite Embedding mit einem ersten Klassifizierer eine erste Klassifizierung bestimmt wird, die definiert, ob das Wort eine Entität für den Knowledge Graph ist oder nicht, oder die definiert welcher Entität oder welchem Typ von Entität für den Knowledge Graph das Wort im Knowledge Graph zuzuordnen ist, wobei für das zweite Embedding mit einem zweiten Klassifizierer eine zweite Klassifizierung bestimmt wird, die definiert, welchem Typ von Embeddings aus einer Vielzahl von Typen von Embeddings das zweite Embedding zuzuordnen ist, wobei wenigstens ein Parameter für die Funktion abhängig von wenigstens einem Parameter für den ersten Klassifizierer und abhängig von wenigstens einem Parameter für den zweiten Klassifizierer definiert ist. Die Funktion umfasst einen Generator, der das zweite Embedding für das erste Embedding generiert. Die Parameter für die Funktion definieren den Generator. Dadurch können mehrere Embeddings geschickt kombiniert werden, wodurch die benötigten Parameter des ersten Klassifizierers gegenüber einer Konkatenation der Embeddings reduziert wird. Die erste Klassifizierung für das zweite Embedding gibt an, ob das Wort eine Entität des Knowledge Graphs ist oder welcher Entität oder welchem Typ von Entität das Wort zuzuordnen ist. Die zweite Klassifizierung gibt einen Typ für das zweite Embedding an. Abhängig vom Typ der für eine Vielzahl von zweiten Embeddings bestimmt wird, kann erkannt werden, ob die Abbildung durch die Funktion zu Embedding-Typ-Clustern von zweiten Embeddings für eine Vielzahl von Worten in einem gemeinsamen Raum führt. Dadurch, dass die Parameter der Funktion abhängig von den Parametern der Klassifikation definiert sind, werden zweite Embeddings bestimmt, die keine Embedding-Typ-Cluster bilden und daher für erste Klassifizierung besonders gut geeignet sind.

Für ein Training kann eine Vielzahl von Worten bereitgestellt werden, wobei mit dem ersten Klassifizierer die erste Klassifizierung des zweiten Embeddings für wenigstens einen Teil der Vielzahl von Worten bestimmt wird, wobei mit dem zweiten Klassifizierer die zweite Klassifizierung des zweiten Embeddings für den wenigstens einen Teil der Vielzahl von Worten bestimmt wird, wobei abhängig vom wenigstens einen Teil der Vielzahl von Worten Parameter für den ersten Klassifizierer bestimmt werden, für die eine erste Funktion für den ersten Klassifizierer eine erste Bedingung erfüllt, wobei abhängig von diesen Parametern für den ersten Klassifizierer und wenigstens einem Teil der Vielzahl von Worten Parameter für den zweiten Klassifizierer bestimmt werden, für die eine zweite Funktion für den zweiten Klassifizierer eine zweite Bedingung erfüllt, wobei die erste Funktion abhängig von den Parametern für den ersten Klassifizierer und der ersten Klassifizierung definiert ist, wobei die zweite Funktion abhängig von den Parametern für den zweiten Klassifizierer und der zweiten Klassifizierung definiert ist. Vorzugsweise wird ein adversarial learning mit einem Gradientenabstiegsverfahren eingesetzt, um die Parameter der Klassifizierer zu bestimmen. Der zweite Klassifizierer stellt hierbei einen Diskriminator dar, der trainiert wird, die Embedding-Typ-Cluster zu identifizieren, die in dem zweiten Embeddings möglicherweise enthalten sind. Die Funktion umfasst hierbei einen Generator, der trainiert wird, es dem Diskriminator schwer zu machen, Embedding-Typ-Cluster zu identifizieren.

Die Parameter der Funktion, und damit des Generators, werden vorzugsweise abhängig von einer Differenz zwischen Gradienten für den ersten Klassifizierer und Gradienten für den zweiten Klassifizierer bestimmt. Dadurch werden die Parameter des Generators mit entgegengesetzter Richtung, d.h. umgekehrtem Vorzeichen, bezüglich der Gradienten des zweiten Klassifizierers aus dem Diskriminator bestimmt.

Vorzugsweise wird eine Vielzahl der zweiten Embeddings bestimmt, wobei für jedes Wort aus einer Vielzahl unterschiedlicher Worte eine Gruppe mit verschiedenen ersten Embeddings bestimmt wird und diese Gruppe auf eine Gruppe zweiter Embeddings abgebildet wird. Damit können Worte aus Sätzen parallel auf zweite Embeddings abgebildet werden, die gemeinsam einen Eingang für den ersten Klassifizierer bilden können.

Es kann vorgesehen sein, für ein Wort, verschiedene Arten von ersten Embeddings bestimmt werden wobei die verschiedenen Arten von ersten Embeddings ein wort-basiertes Embedding, ein buchstaben-basiertes Embedding, ein teilwort-basierte Embedding und/oder ein domänenspezifisches Embedding, insbesondere für eine biomedizinische oder materialwissenschaftliche Domäne, umfassen. Es kann eine Gruppe von ersten Embeddings unterschiedlichen Typs vorgesehen sein. Diese können verschiedene Arten umfassen, z.B. wortbasiert oder buchstabenbasiert. Ein Generator bildet in diesem Fall jedes erste Embedding aus der Gruppe auf ein zweites Embedding ab. Dadurch wird eine Gruppe von zweiten Embeddings erzeugt. Der erste Klassifizierer berechnet für jedes zweite Embedding ein Gewicht und bildet damit eine gewichtete Kombination, im Beispiel eine Summe, aus den zweiten Embeddings. Basierend darauf trifft der erste Klassifizierer seine Klassifikationsentscheidung. Der zweite Klassifizierer, der Diskriminator, versucht für die zweiten Embeddings herauszufinden, von welchem Typ das Embedding kam.

Die Funktion kann vorgesehen sein, dass wenigstens ein erstes Embedding einer Vielzahl erster Embeddings mit einer Abbildung auf ein zweites Embedding vorgegebener Dimension abgebildet wird. Dadurch werden die Embeddings unterschiedlicher Worte sinnvoll, d.h. ohne erkennbare Embedding-Typ-Cluster auf einen gemeinsamen Raum als Eingang für den ersten Klassifizierer abgebildet.

Das Gewicht für die Kombination eines zweiten Embeddings mit wenigstens einem anderen zweiten Embedding kann abhängig von diesem einen zweiten Embedding bestimmt werden, wobei die Kombination abhängig von dem mit dem Gewicht gewichteten zweiten Embedding bestimmt wird. Dadurch wird eine besonders gute Gewichtung des Embeddings für die Kombination erreicht.

Die Kombination kann abhängig von einem Produkt des zweiten Embeddings mit dem Gewicht bestimmt werden. Dadurch wird eine besonders gut geeignete Kombination bestimmt.

Für ein Wort kann eine Vielzahl zweiter Embeddings bestimmt werden, wobei für die Vielzahl zweiter Embeddings eine Vielzahl Produkte bestimmt wird, wobei die Kombination abhängig von einer Summe der Produkte bestimmt wird. Gegenüber einer Konkatenation wird dadurch die benötigte Parameteranzahl im ersten Klassifizierer reduziert.

Das Gewicht kann abhängig von einem Merkmal bestimmt werden, das eine Eigenschaft des Worts charakterisiert. Dies ermöglicht es, Wortmerkmale zu berücksichtigen, die eine Platzierung der Embeddingkombination im gemeinsamen Raum weiter verbessern.

Das Gewicht kann mit einer Softmax-Funktion auf Werte zwischen 0 und 1 abgebildet sein insbesondere wobei sich Gewichte für unterschiedliche Embeddings vorgegebener Dimension für das Wort zu 1 aufsummieren.

Ein Vektor kann ein Embedding definieren, wobei unterschiedliche Vektoren für verschiedene erste Embeddings für das Wort mit einer Abbildung auf Vektoren gleicher Dimension abgebildet werden.

Die Funktion kann das zweite Embedding mit einem Generator bestimmen, der durch die Parameter definiert ist. Der Generator kann ein künstliches neuronales Netzwerk sein, das durch die Parameter definiert ist.

Die Vorrichtung zur Bestimmung des Knowledge Graphs ist ausgebildet, das Verfahren auszuführen.

Weitere vorteilhafte Ausführungsformen ergeben sich aus der folgenden Beschreibung und der Zeichnung. In der Zeichnung zeigt:

Fig. 1 eine schematische Darstellung einer Vorrichtung zur Bestimmung eines Knowledge Graph,
Fig. 2 eine schematische Darstellung von Komponenten für ein Training einer Klassifiziereinrichtung zur Bestimmung des Knowledge Graph,
Fig. 3 eine schematische Darstellung von Teilen der Klassifiziereinrichtung.

Um Wissensdatenbanken, d.h. Knowledge Graphs, automatisch mit Inhalten zu füllen, können zum Beispiel Entitäten und Konzepte aus Texten extrahiert werden. Diese sind dann Knoten in dem Knowledge Graph.

Die Erkennung von Entitäten oder Konzepten kann mit neuronalen Netzen angegangen werden. Dabei werden hauptsächlich Modelle, d.h. neuronale Netze, verwendet, die für jedes Wort einzeln bestimmen, ob es sich um eine Entität / ein Konzept handelt, und falls ja, welcher Klasse diese zuzuordnen ist. Eine Klasse ist beispielsweise Person, Ort, Organisation. Die Worte werden dafür durch Embeddings, beispielsweise Vektoren, d.h. Word-Embeddings, repräsentiert.

Die Embeddings können aus verschiedenen Sprachen sein oder unterschiedlichen Typs sein oder auf Funktionen beruhen, die durch Texten unterschiedlicher Domänen trainiert worden sind. Beispiele für einen Typ sind wortbasiert, buchstabenbasiert, kontextabhängig, domänenabhängig (z.B. biomedical oder Materialwissenschaften). Die Erfindung wird am Beispiel unterschiedlicher Typen oder Domänen beschrieben. Unterschiedliche Sprachen sind eine weitere mögliche Anwendung.

Es ist vorteilhaft, wenn die unterschiedlichen Embeddings, die kombiniert werden sollen, sinnvoll in einem gemeinsamen Raum angeordnet sind, d.h. vor allem, in dem gemeinsamen Raum basierend auf ihrer Semantik angeordnet sind und nicht beispielsweise Embedding-Typ-Cluster bilden.

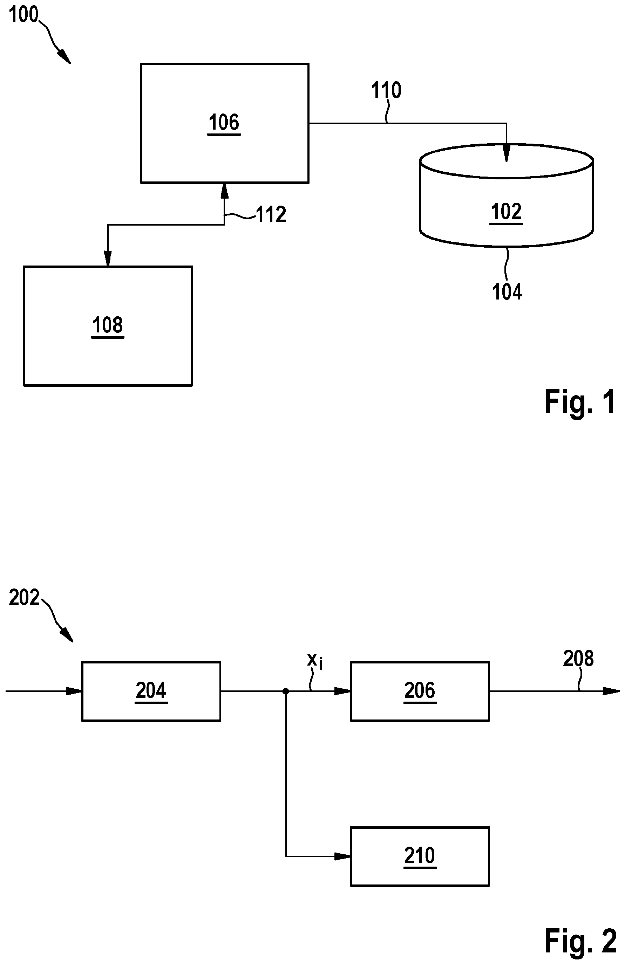

In Figur 1 ist eine schematische Darstellung einer Vorrichtung 100 zur Bestimmung eines Knowledge Graph 102 dargestellt. Die Vorrichtung 100 umfasst einen ersten Speicher 104 zum Speichern des Knowledge Graph 102.

Die Vorrichtung 100 umfasst wenigstens einen Prozessor 106. Der Prozessor 106 ist ausgebildet ein im Folgenden beschriebenes Verfahren auszuführen. Es kann ein zweiter Speicher 108 vorgesehen sein, der Instruktionen für den wenigstens einen Prozessor 106 umfasst, bei deren Ausführung durch den wenigstens einen Prozessor 106 das Verfahren abläuft. Der Prozessor 106 kann ausgebildet sein, über eine erste Datenleitung 110 mit dem ersten Speicher 104 und/oder über eine zweite Datenleitung 112 mit dem zweiten Speicher zu kommunizieren.

Figur 2 zeigt eine schematische Darstellung von Komponenten 202 für ein Training zur Bestimmung des Knowledge Graph. Ein Eingang für das Training ist durch verschiedene Embeddings $e_i$ für ein Wort definiert. Ein Embedding ist im Beispiel durch einen Vektor in einem Vektorraum definiert. Die verschiedenen Embeddings $e_i$ können in unterschiedlichen Vektorräumen definiert sein.

Eine Zuordnungseinrichtung 204 ist ausgebildet, die verschiedenen ersten Embeddings $e_i$ durch eine Abbildung $Q_i$ auf zweite Embeddings $x_i$ abzubilden. Im Beispiel werden die Vektoren für eine Vielzahl erster Embeddings $e_i$ auf eine Vielzahl Vektoren für zweite Embeddings $x_i$ in einem gemeinsamen Vektorraum abgebildet.

Eine Klassifiziereinrichtung 206 ist ausgebildet, das zweite Embedding $x_i$ abhängig von einer Gewichtung $\alpha_i$ der zweiten Embeddings $x_i$ zu einer Kombination $e^{ATT}$ zu kombinieren.

Dadurch wird auch eine Präzision der Klassifiziereinrichtung 206 erhöht. Das im Folgenden beschriebene Adversarial Training führt zu einer weiteren Erhöhung der Präzision, da die ersten Embeddings $e_i$ auf die zweiten Embeddings $x_i$ abgebildet werden die einen sinnvoller im gemeinsamen Raum angeordneten Eingang der Klassifiziereinrichtung 206 bilden, als dies durch eine Konkatenation der ersten Embeddings $e_i$ möglich ist.

Die Klassifiziereinrichtung 206 ist ausgebildet, das zweite Embedding $x_i$ in einer Klassifizierung 208 für den Knowledge Graph zu klassifizieren. Beispielsweise ist die Klassifiziereinrichtung 206 ausgebildet, die gewichtete Kombination der zweiten Embeddings $x_i$ dahingehend zu klassifizieren, ob das dem zweiten Embedding $x_i$ zugrunde liegende Wort eine Entität des Knowledge Graph ist. Beispielsweise ist die Klassifiziereinrichtung 206 ausgebildet, das zweite Embedding $x_i$ dahingehend zu klassifizieren, welcher Entität oder welchem Typ von Entität das dem zweiten Embedding $x_i$ zugrunde liegende Wort im Knowledge Graph zuzuordnen ist.

Zum Training ist ein Diskriminator 210 vorgesehen. Der Diskriminator 210 ist im Beispiel ein Klassifikations-Netzwerk. Der Diskriminators 210 ist ausgebildet, für ein zweites Embedding einen Embedding-Typen zu erkennen.

Für das Training wird beispielsweise eine Gruppe von ersten Embeddings $e_i$ unterschiedlichen Typs bereitgestellt, wobei diese verschiedene Arten umfassen können, z.B. wortbasiert, buchstabenbasiert.

Die Zuordnungseinrichtung 204, umfasst im Beispiel einen Generator $G$. Der Generator $G$ bildet beispielsweise mit der Abbildung $Q_i$ jedes erste Embedding $e_i$ aus der Gruppe auf ein zweites Embedding $x_i$ ab. Damit wird eine Gruppe von zweiten Embeddings $x_i$ erzeugt.

Die Klassifiziereinrichtung 206 berechnet beispielsweise für jedes zweite Embedding $x_i$ ein Gewicht $\alpha_i$ und eine Kombination $e^{ATT}$ aus allen mit ihrem jeweiligen Gewicht $\alpha_i$ gewichteten zweiten Embeddings $x_i$. Die Klassifiziereinrichtung 206 trifft mit einem Klassifizierer $C$ basierend auf der Kombination $e^{ATT}$ eine Klassifikationsentscheidung, d.h. im Beispiel die Klassifizierung 208 für den Knowledge Graph.

Der Diskriminator 210, versucht für jedes der zweiten Embeddings $x_i$ herauszufinden, von welchem der unterschiedlichen Typen das erste Embedding $e_i$ war, mit dem dieses zweite Embedding $x_i$ bestimmt wurde.

Für das Training wird eine Vielzahl der zweiten Embeddings $x_i$ bestimmt. Beispielsweise wird für jedes Wort aus einer Vielzahl unterschiedlicher Worte eine Gruppe mit verschiedenen ersten Embeddings $e_i$ bestimmt und diese Gruppe auf eine Gruppe von zweiten Embeddings $x_i$ abgebildet.

Im Training wird im Beispiel die Zuordnungseinrichtung 204, der Diskriminator 210 und die Klassifiziereinrichtung 206 trainiert. Der Diskriminator 210 wird dazu trainiert, gegeben die Vielzahl der zweiten Embeddings $x_i$ zu identifizieren, welchem Embedding-Typ das zugrunde liegende erste Embedding $e_i$ angehören. Der Diskriminator 210 ist ausgebildet, Embedding-Typ-Cluster zu identifizieren.

Beispielsweise wird durch die Technik von Gradient-Reversal eine Abbildung durch die Zuordnungseinrichtung 204 gelernt, die es dem Diskriminator 210 so schwer wie möglich macht, zu identifizieren, welchem Embedding-Typ ein zweites Embedding angehört. Dieses Lernen wird im Folgenden beschrieben. Der Diskriminator 210 kann dadurch keine Embedding-Typ-Cluster mehr erkennen. Die Gradient-Reversal Technik ist beispielsweise in Yaroslav Ganin, Evgeniya Ustinova, Hana Ajakan, Pascal Germain, Hugo Larochelle, Francois Laviolette, Mario Marchand, and Victor Lempitsky. 2016. Domain-adversarial training of neural networks. Journal of Machine Learning Research, 17 beschrieben.

Die dadurch resultierende Abbildung durch die Zuordnungseinrichtung 204 bildet keine Embedding-Typ-Cluster mehr, da solche Cluster leicht zu diskriminieren wären.

Im Folgenden wird dies für die automatische Erkennung von Entitäten und Konzepten in Texten verwendet werden. Basierend darauf können die Entitäten automatisch extrahiert und beispielsweise in einer Datenbank oder als Knoten in einem Knowledge Graphen gespeichert und verarbeitet werden.

Der Eingang kann durch Worte in allen Sprachen und Domänen definiert sein, solange es Trainingsdaten für das Trainieren gibt.

Die Anwendung ist nicht auf die Entitätenerkennung beschränkt. Embeddings als Eingaberepräsentation spielen in sehr vielen Bereichen des Natural Language Processing eine dominierende Rolle (z.B. Parsing, Relationsextraktion, automatische Zusammenfassung von Texten, etc.). Für alle diese Bereiche ist eine Anwendung möglich.

Die so trainierte Klassifiziereinrichtung 206 ist ausgebildet für eine automatische Erkennung von Entitäten und Konzepten. Die so trainierte Zuordnungseinrichtung 204 ist ausgebildet unterschiedliche Embedding-Typen auf sinnvolle Weise in einen gemeinsamen Raum abzubilden, bevor sie kombiniert werden.

Die so trainierte Zuordnungseinrichtung 204 und die so trainierte Klassifiziereinrichtung 206 klassifizieren jedes Wort eines vorliegenden Dokuments als zu einer vorgegebenen Menge an Klassen gehörend oder nicht.

Die Zuordnungseinrichtung 204 kann als lineare oder nichtlineare Abbildung, d.h. als feed-forward Netzwerk implementiert sein. Die Klassifiziereinrichtung 206 kann als rekurrentes neuronales Netze implementiert sein. Die Wörter können durch Embeddings als Wortvektoren repräsentiert sein. Das rekurrente neuronale Netz ist ein rückgekoppeltes künstliches neuronales Netz, das sich im Gegensatz zu einem künstlichen neuronalen Netz das feedforward Verbindungen zwischen Neuronen verschiedener Schichten aufweist auch Verbindungen von Neuronen einer Schicht zu Neuronen derselben oder einer vorangegangenen Schicht aufweist.

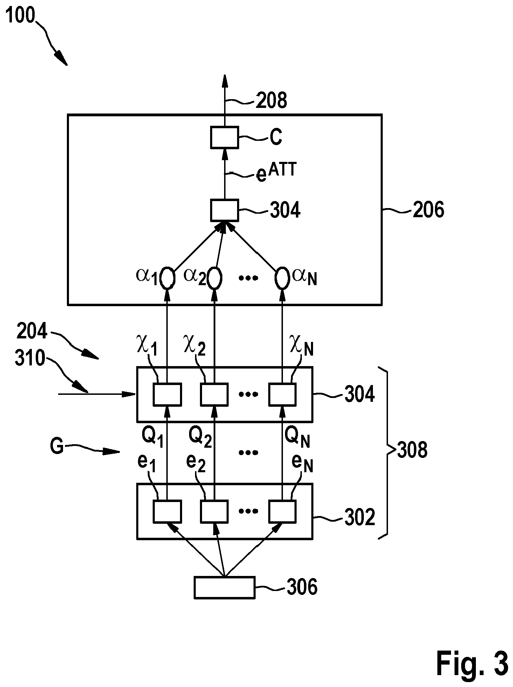

Figur 3 stellt eine schematische Darstellung von Teilen der Zuordnungseinrichtung 204 und der Klassifiziereinrichtung 206 dar. Die Zuordnungseinrichtung 204 umfasst im Beispiel einen Eingang 302 und einen Ausgang 304. Der Eingang 302 ist ausgebildet, eine Anzahl N erste Embeddings $e_i$ zu bestimmen. Die ersten Embeddings $e_i$ für ein Wort 306 sind in Figur 3 mit $e_1$, $e_2$, ..., $e_N$ bezeichnet.

Es können verschiedene Arten von ersten Embeddings $e_i$ verwendet werden, z.B. wort-basierte Embeddings, buchstaben-basierte Embeddings, teilwortbasierte Embeddings. Diese können auf großen Mengen Daten trainiert sein, z.B. Nachrichten oder Internetartikel. Für besondere Domänen, wie z.B. biomedizinische oder materialwissenschaftliche Domänen, können auch domänenspezifische Embeddings verwendet werden, d.h. Embeddings, die auf Daten der entsprechenden Domäne trainiert wurden. Beispiele für erste Embeddings $e_i$, die bestimmbar sein können, sind Character Embedding, Char, Byte Pair Encoding embeddings, BPEmb, FastText embeddings, fastText, FLAIR embeddings, FLAIR, BERT embeddings, BERT.

Sofern bereits erste Embeddings $e_i$ beispielsweise aus einer Datenbank bereitgestellt werden, umfasst die Zuordnungseinrichtung 204 keinen Eingang 302. Im Beispiel sind die N ersten Embeddings $e_i$ in N Vektorräumen definiert, die unterschiedliche Dimension haben können.

Die Zuordnungseinrichtung 204 umfasst eine Funktion 308, die zwischen dem Eingang 302 und dem Ausgang 304 angeordnet ist. Die Funktion 308 ist ausgebildet, für jedes erste Embedding $e_i$ ein zweites Embedding zu bestimmen, das am Ausgang 304 ausgegeben wird. Die Funktion 308 ist ausgebildet, zweite Embeddings $x_1$, $x_2$, ..., $x_N$ für die ersten Embeddings $e_1$, $e_2$, ..., $e_N$ zu bestimmen.

Im Beispiel werden durch die Funktion 308 die N ersten Embeddings $e_i$ mit einer Abbildung auf N Embeddings derselben Größe $E$ abgebildet. Im Beispiel sind für die mit $e_1$, $e_2$, ..., $e_N$ bezeichneten N ersten Embeddings $e_i$ für das Wort 306 N Abbildungen $Q_1$, $Q_2$, ..., $Q_N$ definiert. Jedes Embedding $e_i$ wird durch die Abbildung $Q_i$ auf ein zweites Embedding $x_i$ abgebildet, wobei $x_i \in \mathbb{R}^E$. Diese Abbildungen werden im Beispiel im Training mitgelernt. Die Abbildungen $Q_i$ sind für jeden Embedding-Typ i durch eine Matrix definiert, die aus Parametern besteht. Diese Parameter werden zufällig initialisiert und dann beim Training gelernt werden. Die Funktion 308 kann einen Generator $G$ umfassen. Der Generator $G$ kann ein künstliches neuronales Netzwerk umfassten, das abhängig von den Paramtern für die Funktion definiert ist.

In einem Aspekt wird als zusätzlicher Eingang für die Funktion 308 ein Wortmerkmal $f \in \mathbb{R}^F$ verwendet. Dafür kann die Zuordnungseinrichtung 204 einen weiteren Eingang 310 vorsehen. Das Wortmerkmal $f$ kann ein Vektor der Größe $F$ sein, der an jedes der Embeddings $x_i$ konkateniert, d.h. angehängt, wird. Beispiele für ein Wortmerkmal $f$ sind Länge, Frequenz oder Wortform. Die Länge wird beispielsweise durch eine Abbildung des Worts 306 abhängig von einer Anzahl Buchstaben, die das Wort 306 bilden, auf einen Vektor der Dimension $F$ berücksichtigt. Beispielsweise wird dazu ein one-hot Encoding verwendet. Beispielsweise wird für eine Dimension $F=20$ ein Wort auf einen Vektor abgebildet, der seine Länge angibt. Worte, die mehr als 19 Buchstaben umfassen können auf denselben Vektor abgebildet werden, der die Länge als 20 angibt. Eine Frequenz des Worts 306 wird beispielsweise umgekehrt proportional zu seinem Rang in einer nach dem Auftreten des Worts in einem Text sortierten Liste bestimmt. Dazu wird beispielsweise ein word2vec Embedding eingesetzt und ausgewertet. Die Wortform kann beispielsweise mit einer als SpaCys shape feature bekannten Methode bestimmt werden.

Es kann vorgesehen sein, mehrerer Wortmerkmale $f$ zu berücksichtigen, indem diese in einen einzigen Vektor konkateniert werden.

Die Klassifiziereinrichtung 206 ist ausgebildet, für jedes Embedding $x_i$ ein Gewicht $\alpha_i$ zu bestimmen. Dazu kann eine vollständig verbundene verborgene Schicht des rekurrenten neuronalen Netzwerks der Größe $H$ mit Parametern $W \in \mathbb{R}^{H \times E}$, $U \in \mathbb{R}^{H \times F}$, $V \in \mathbb{R}^{1 \times H}$ vorgesehen sein wobei die das Embedding

$x_i$ und das Wortmerkmal $f$ den Eingang für diese Schicht definieren und das Gewicht $\alpha_i$ bestimmt wird durch

$$\alpha_i = \frac{exp\big(V \cdot tanh(Wx_i + Uf)\big)}{\sum_{l=1}^{n} exp\big(V \cdot tanh(Wx_l + Uf)\big)}$$

Die Klassifiziereinrichtung 206 ist ausgebildet, das Embedding $x_i$ mit dem Gewicht $\alpha_i$ gewichtet zu kombinieren, im Beispiel durch

$$e^{ATT} = \sum_i \alpha_i \cdot x_i$$

wobei die Kombination $e^{ATT}$ im Beispiel ein Summenvektor ist.

Für jedes Wort 306, für das bestimmt werden soll, ob es sich um eine Entität handelt und wenn ja, um welche, wird eine gewichtete Kombination $e^{ATT}$ der unterschiedlichen Wordvektoren berechnet wobei die unterschiedlichen ersten Embeddings $e_i$ mit der Abbildung $x_i = Q_i e_i$ auf die gleiche Dimension abgebildet werden. Die unterschiedlichen Gewichte $\alpha_i$ werden für die unterschiedlichen Embeddings $x_i$ mit Hilfe der Embeddings $x_i$ selbst sowie den dem Wortmerkmal $f$ bestimmt. Die N Gewichte $\alpha_1, \alpha_2 \dots, \alpha_N$ werden im Beispiel mit einer Softmax-Funktion auf Werte zwischen 0 und 1 abgebildet. Dadurch summieren sich die N Gewichte $\alpha_1, \alpha_2 \dots, \alpha_N$ zu 1 auf.

Die unterschiedlichen Embeddings $x_i$ werden im Beispiel mit ihrem jeweiligen Gewicht $\alpha_i$ multipliziert und aufsummiert. Der Summenvektor wird als Repräsentation für das Wort 306 verwendet.

Es kann eine Zuordnungseinrichtung 204 vorgesehen sein, die eine zu klassifizierende Repräsentation für ein Wort 306 bestimmt. Im Beispiel werden mit einer Zuordnungseinrichtung 204 nacheinander für unterschiedliche Worte 306 unterschiedliche zweite Embeddings $x_i$ als Eingang für die Klassifiziereinrichtung 206 bestimmen.

Die Klassifiziereinrichtung 206 ist ausgebildet, die Repräsentation für das Wort 306, d.h. eine Kombination $e^{ATT}$ zu klassifizieren. Die Klassifiziereinrichtung 206 kann ausgebildet sein, die unterschiedlichen Kombinationen $e^{ATT}$ für unterschiedliche Worte zu klassifizieren.

Die Klassifiziereinrichtung 206 umfasst im Beispiel ein künstliches neuronales Netzwerk mit einer Eingangsschicht, einem bidirektionalen long-short term memory, BiLSTM, und einem conditional random field output layer, CRF. Das BiLSTM Netzwerk ist beispielsweise wie in Sepp Hochreiter and Jürgen Schmidhuber. 1997. Long short-term memory. Neural computation, 9(8):1735-1780 beschrieben definiert. Das CRF ist beispielsweise wie in John D. Lafferty, Andrew McCallum, and Fernando C. N. Pereira. 2001. Conditional random fields: Probabilistic models for segmenting and labeling sequence data. In Proceedings of the Eighteenth International Conference on Machine Learning, ICML'01, pages 282-289, San Francisco, CA, USA. Morgan Kaufmann Publishers Inc. Guillaume Lample, Miguel Ballesteros, Sandeep Subramanian, Kazuya Kawakami, and Chris Dyer. 2016. Neural architectures for named entity recognition. In Proc. of NAACL beschrieben definiert.

Die Klassifiziereinrichtung 206 ist für Entitätenerkennung ausgebildet. Die Klassifiziereinrichtung 206 klassifiziert gewichtete Wortvektoren, d.h. unterschiedliche Kombinationen $e^{ATT}$.

Im Training werden die Parameter für die Funktion 308 und für die Klassifiziereinrichtung 206 gelernt.

Der Diskriminator 210 ist im Beispiel ein Klassifikations-Netzwerk das einen logarithmischen multinominalen linearen Klassifizierer $D$ mit einer Lossfunktion $L_D$ darstellt, die auf einer Kreuzkorrelation basiert.

Die Klassifiziereinrichtung 206 wird mit einer Lossfunktion $L_C$ für den Klassifizierer $C$, dazu trainiert, eine logarithmische Wahrscheinlichkeit der korrekten Klassifikation des Worts 306 zu verbessern oder zu maximieren. Im Beispiel ist der Klassifizierer $C$ durch den CRF definiert. Mit den Parametern $\theta_G$ für den Generator $G$ aus der Zuordnungseinrichtung 204, den Parametern $\theta_D$ für den Klassifizierer $D$ aus dem Diskriminator 210 und den Parametern $\theta_C$ für den Klassifizierer $C$ aus der Klassifiziereinrichtung 206 werden im Beispiel die Parameter mit Gradienten $\frac{\delta L_D}{\delta \theta_G}$ und $\frac{\delta L_D}{\delta \theta_D}$ für den Klassifizierer $D$ und Gradienten $\frac{\delta L_C}{\delta \theta_G}$ und $\frac{\delta L_C}{\delta \theta_C}$ für den Klassifizierer $C$ wie folgt aktualisiert:

$$\theta_D = \theta_D - \eta\lambda \frac{\delta L_D}{\delta \theta_D}$$

$$\theta_C = \theta_C - \eta\lambda \frac{\delta L_C}{\delta \theta_C}$$

$$\theta_G = \theta_G - \eta\left(\frac{\delta L_C}{\delta \theta_G} - \lambda \frac{\delta L_D}{\delta \theta_G}\right)$$

wobei $\eta$ eine Lernrate und $\lambda$ ein Hyper-Parameter zur Beeinflussung der Auswirkungen des Diskriminators 210 ist.

Die Parameter $\theta_G$ des Generators $G$ werden daher in entgegengesetzter Richtung der Gradienten aus der Lossfunktion $L_D$ für Klassifizierer $D$ aus dem Diskriminator 210 bestimmt. Dadurch können die zweiten Embeddings für unterschiedliche Embedding-Typen keine Cluster im gemeinsamen Embedding Raum bilden.

Ein Beispiel für eine Implementierung in einem künstlichen neuronalen Netzwerk wird im Folgenden für ein BiLSTM mit einer verborgenen Schicht mit 256 Knoten je Richtung beschrieben.

Das Training ist im Beispiel ein überwachtes Training in Epochen mit Batches vorgesehen. Ein Batch kann eine Größe von 16 Sätzen umfassen, wobei Paare von Worten und Labels definiert sind. Im Training wird beispielsweise ein stochastische Gradientenabstiegsverfahren mit einer Lernrate $\eta$ = 0.2 vorgesehen ist.

Es kann vorgesehen sein, die Lernrate $\eta$ nach 3 aufeinanderfolgenden Epochen zu halbieren. Der Klassifizierer $D$ aus dem Diskriminator 210 kann nach jeweils $k$ = 10 Batches des Trainings des BiLSTM trainiert werden.

Für Character Embeddings werden beispielsweise die Buchstaben des Worts 306 durch zufällig initialisierte Embeddings repräsentiert. Diese sind ein Eingang für ein BiLSTM mit 25 verborgenen Schichten in jeder Richtung wobei ein Zustand der letzten verborgenen Schicht bei einer forward propagation und der Zustand dieser Schicht bei einer daran anschließenden backward propagation in einen Vektor der Dimension 50 konkateniert werden, um das Wort 306 als erstes Embedding $e_i$ zu repräsentieren.

Für FastText embedding werden beispielsweise n-gram embeddings bestimmt, wobei das Wort 306 durch eine normierte Summe der Embeddings der n-gram für das Wort 306 bestimmt werden. FastText embedding ist beispielsweise in Piotr Bojanowski, Edouard Grave, Armand Joulin, and Tomas Mikolov. 2017.

Enriching word vectors with subword information. Transactions of the Association for Computational Linguistics, 5:135-146 beschrieben

Für BPEmb werden beispielsweise Byte Pair Encoding embeddings zum Erzeugen eines Wortvektors verwendet, wobei die Vektoren für Komponenten des Wortes 306 bestimmt werden. Das Wort 306 wird dazu im Beispiel in nicht überlappende Komponenten unterteilt. Die nicht-überlappenden Komponenten werden abhängig von ihrer Frequenz bestimmt. Der Vektor für das Wort selbst wird dann als Kombination, z.B. Durchschnitt, aus den Komponenten-Vektoren bestimmt. BPEmb ist beispielsweise in Benjamin Heinzerling and Michael Strube. 2018. BPEmb: Tokenization-free Pre-trained Subword Embeddings in 275 Languages. In Proceedings of the Eleventh International Conference on Language Resources and Evaluation (LREC 2018), Miyazaki, Japan. European Language Resources Association (ELRA) beschrieben.

Für BERT Embeddings und für FLAIR Embeddings wird im Beispiel ein vortrainiertes Modell verwendet und für das Wort 306 ein Vektor abhängig von allen Worten im Kontext beispielsweise eines Satzes oder Textes der das Wort 306 umfasst bestimmt. BERT Embeddings ist beispielsweise in Jacob Devlin, Ming-Wei Chang, Kenton Lee, and Kristina Toutanova. 2019.

BERT: Pre-training of deep bidirectional transformers for language understanding. In Proceedings of the 2019 Conference of the North American Chapter of the Association for Computational Linguistics: Human Language Technologies, pages 4171-4186. beschrieben.

FLAIR Embeddings sind beispielsweise in Alan Akbik, Duncan Blythe, and Roland Vollgraf. 2018. Contextual string embeddings for sequence labeling. In Proceedings of the 27th International Conference on Computational Linguistics, pages 1638-1649 und Alan Akbik, Tanja Bergmann, and Roland Vollgraf. 2019. Pooled contextualized embeddings for named entity recognition. In Proceedings of the 2019 Conference of the North American Chapter of the Association for Computational Linguistics: Human Language Technologies, pages 724-728 beschrieben.

Domänen spezifische Embeddings werden beispielsweise mit einem vortrainierten Modell bestimmt.

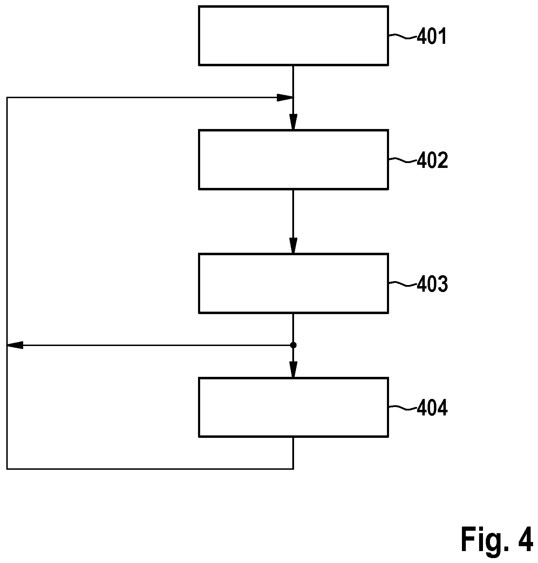

Ein Verfahren zur Bestimmung des Knowledge Graph wird im Folgenden mit Bezug auf Figur 4 beschrieben. Das Verfahren kann für jedes Wort 306, für das bestimmt werden soll, ob es sich um eine Entität handelt und wenn ja, um welche, ausgeführt werden.

In einem optionalen Schritt 401 werden für das Wort 306 verschiedene Arten von Embeddings $e_i$, z.B. wort-basierte Embeddings, buchstaben-basierte Embeddings, teilwort-basierte Embeddings bestimmt. Für das Adressieren besonderer Domänen wie z.B. biomedizinische oder materialwissenschaftliche Domänen kann in diesem Schritt auch ein domänenspezifisches Embedding $e_i$ verwendet werden, das auf Daten der entsprechenden Domäne trainiert wurde.

Im Beispiel definiert ein Wortvektor das erste Embedding $e_i$. Im Beispiel wird für das Wort 306 eine Vielzahl erster Embeddings $e_i$ bestimmt.

In einem Schritt 402 wird für das Wort 306 eine abhängig von einem ersten Embedding $e_i$ ein zweites Embedding $x_i$ bestimmt:

a. Die unterschiedlichen ersten Embeddings $e_i$ werden mit der Abbildung $Q$ auf die zweiten Embeddings $x_i$ gleicher Dimension abgebildet.

b. Für das Wort 306 wird eine Kombination $e^{ATT}$ aus zweiten Embeddings bestimmt. Die Kombination $e^{ATT}$ ist im Beispiel eine gewichtete Kombination der Vielzahl zweiter Embeddings $x_i$. Die Kombination $e^{ATT}$ ist im Beispiel eine gewichtete Kombination der unterschiedlichen Wortvektoren für die Vielzahl zweiter Embeddings $x_i$:
Die Funktion 308 berechnet Gewichte $\alpha_i$ für die unterschiedlichen Embeddings $x_i$ mit Hilfe der Embeddings $x_i$ selbst. Es kann vorgesehen sein, die Gewichte $\alpha_i$ für die unterschiedlichen zweiten Embeddings $x_i$ mit Hilfe der zweiten Embeddings $x_i$ selbst sowie den oben genannten zusätzlichen Merkmalen, beispielsweise dem Wortmerkmal $f$ zu bestimmen.

Es kann vorgesehen sein, die Gewichte $\alpha_i$ mit einer Softmax-Funktion auf Werte zwischen 0 und 1 abzubilden, wobei sich die Gewichte $\alpha_i$ zu 1 aufsummieren.

c. Die unterschiedlichen zweiten Embeddings $x_i$ werden mit ihren Gewichten $\alpha_i$ multipliziert und aufsummiert. Die unterschiedlichen zweiten Embeddings $x_i$ sind im Beispiel gewichtete Wortvektoren für das Wort 306.

Der so bestimmte Summenvektor, d.h. die Kombination $e^{ATT}$, definiert eine Repräsentation für das Wort 306.

In einem Schritt 403 wird mit der Klassifiziereinrichtung 206 eine erste Klassifikation insbesondere eine Entitätenerkennung für das Wort 306 mittels der Repräsentation d.h. mittels der Kombination $e^{ATT}$ ausgeführt. Beispielsweise wird abhängig von der Kombination $e^{ATT}$ aus zweiten Embeddings $x_i$ bestimmt, ob das Wort 306 eine Entität des Knowledge Graph ist. Optional kann, falls das Wort 306 eine Entität des Knowledge Graphs ist, bestimmt werden, zu welcher Klasse von Entitäten das Wort gehört.

In einem Training werden die Schritte 402 bis 403 in Epochen mit Batches von Trainingsdaten ausgeführt, wobei in einem Schritt 405 die Parameter $\theta_C$ für den Klassifizierer $C$ mit der Lossfunktion $L_C$ für den Klassifizierer $C$ bestimmt werden. Der Klassifizierer $C$ wird mit der Lossfunktion $L_C$ für den Klassifizierer $C$ insbesondere dazu trainiert, eine logarithmische Wahrscheinlichkeit der korrekten Klassifikation des Worts 306 zu verbessern oder zu maximieren.

Die Parameter $\theta_G$ für den Generator $G$ werden abhängig von den Parameter $\theta_C$ für den Klassifizierer $C$ und den Parametern $\theta_D$ für den Klassifizierer $D$ aus dem Diskriminator 210 bestimmt.

Zudem kann in einem Schritt 404 vorgesehen sein, insbesondere nachdem eine Anzahl Batches für das Training des Klassifizierers $C$ ausgeführt wurden, ein Training für die Parameter $\theta_D$ für den Klassifizierer $D$ aus dem Diskriminator 210 durchzuführen. Der Klassifizierer $D$ bestimmt eine zweite Klassifikation für eine Vielzahl zweiter Embeddings $x_i$, die angibt, ob das zweite Embedding $x_i$ einem Typ von Embeddings aus einer Vielzahl von Typen von Embeddings zuzuordnen ist oder nicht.

Für das Training wird eine Vielzahl von Worten 306 bereitgestellt. Für wenigstens ein Wort 306 wird die Vielzahl erster Embeddings $e_i$ bestimmt, die die zweiten Embeddings $x_i$ definieren.

Mit dem ersten Klassifizierer $C$ wird die erste Klassifizierung der zweiten Embeddings $x_i$ für wenigstens einen Teil der Worte 306 bestimmt.

Mit dem zweiten Klassifizierer $D$ wird die zweite Klassifizierung des zweiten Embeddings $x_i$ für wenigstens einen Teil der Worte 306 bestimmt.

Abhängig von wenigstens einem Teil der Vielzahl von Worten 306 werden die Parameter $\theta_C$ für den ersten Klassifizierer $C$ bestimmt, für die eine erste Funktion, die Lossfunktion $L_C$ für den ersten Klassifizierer $C$ eine erste Bedingung erfüllt. Beispielsweise soll ein Wert der Lossfunktion $L_C$ verkleinert oder minimiert werden.

Abhängig von diesen Parametern $\theta_C$ für den ersten Klassifizierer $C$ und wenigstens einem Teil der Vielzahl von Worten 306 werden die Parameter $\theta_D$ für den zweiten Klassifizierer $D$ bestimmt, für die eine zweite Funktion, die Lossfunktion $L_D$ für den zweiten Klassifizierer $D$ eine zweite Bedingung erfüllt. Beispielsweise soll ein Wert der Lossfunktion $L_D$ verkleinert oder minimiert werden.

Die erste Funktion $L_C$ ist abhängig von den Parametern $\theta_C$ für den ersten Klassifizierer $C$ und der ersten Klassifizierung definiert.

Die zweite Funktion $L_D$ ist abhängig von den Parametern $\theta_D$ für den zweiten Klassifizierer D und der zweiten Klassifizierung definiert.

Das Training umfasst im Beispiel mehrere Iterationen und endet beispielsweise nach einer vergebenen Anzahl von Epochen.

## Patentansprüche

1. Verfahren zur Bestimmung eines Knowledge Graph, **dadurch gekennzeichnet, dass** für ein erstes Embedding für ein Wort (306) mit einer Funktion (308) ein zweites Embedding ($x_i$) bestimmt wird (402), wobei für das zweite Embedding ($x_i$) mit einem ersten Klassifizierer ($C$) eine erste Klassifizierung bestimmt wird (403), die definiert, ob das Wort (306) eine Entität für den Knowledge Graph ist oder nicht, oder die definiert welcher Entität oder welchem Typ von Entität für den Knowledge Graph das Wort (306) im Knowledge Graph zuzuordnen ist, wobei für das zweite Embedding ($x_i$) mit einem zweiten Klassifizierer ($D$) eine zweite Klassifizierung bestimmt wird (404), die definiert, welchem Typ von Embeddings aus einer Vielzahl von Typen von Embeddings das zweite Embedding ($x_i$) zuzuordnen ist, wobei in einem Training wenigstens ein Parameter ($\theta_G$) für die Funktion (308) abhängig von wenigstens einem Gradienten für das Training des ersten Klassifizierer ($C$) und abhängig von wenigstens einem Gradienten für das Training des zweiten Klassifizierer ($D$) trainiert wird.

2. Verfahren nach Anspruch 1, **dadurch gekennzeichnet, dass** für das Training eine Vielzahl von Worten (306) bereitgestellt wird, wobei mit dem ersten Klassifizierer ($C$) die erste Klassifizierung des zweiten Embeddings ($x_i$) für wenigstens einen Teil der Vielzahl von Worten (306) bestimmt wird, wobei mit dem zweiten Klassifizierer ($D$) die zweite Klassifizierung des zweiten Embeddings ($x_i$) für den wenigstens einen Teil der Vielzahl von Worten (306) bestimmt wird, wobei abhängig vom wenigstens einen Teil der Vielzahl von Worten (306) Parameter ($\theta_C$) für den ersten Klassifizierer ($C$) bestimmt werden (403), für die eine erste Funktion ($L_C$) für den ersten Klassifizierer ($C$) eine erste Bedingung erfüllt, wobei abhängig von diesen Parametern ($\theta_C$) für den ersten Klassifizierer ($C$) und wenigstens einem Teil der Vielzahl von Worten (306) Parameter ($\theta_D$) für den zweiten Klassifizierer ($D$) bestimmt werden (404), für die eine zweite Funktion ($L_D$) für den zweiten Klassifizierer ($D$) eine zweite Bedingung erfüllt, wobei die erste Funktion ($L_C$) abhängig von den Parametern ($\theta_C$) für den ersten Klassifizierer ($C$) und der ersten Klassifizierung definiert ist, wobei die zweite Funktion ($L_D$) abhängig von den Parametern ($\theta_D$) für den zweiten Klassifizierer ($D$) und der zweiten Klassifizierung definiert ist.

3. Verfahren nach Anspruch 2, **dadurch gekennzeichnet, dass** die Parameter ($\theta_G$) der Funktion (308) abhängig von einer Differenz zwischen Gradienten für den ersten Klassifizierer ($C$) und Gradienten für den zweiten Klassifizierer ($D$) bestimmt werden.

4. Verfahren nach einem der vorherigen Ansprüche, **dadurch gekennzeichnet, dass** eine Vielzahl der zweiten Embeddings ($x_i$) bestimmt wird (402), wobei für jedes Wort (306) aus einer Vielzahl unterschiedlicher Worte eine Gruppe mit verschiedenen ersten Embeddings ($e_i$) bestimmt wird (401) und diese Gruppe auf eine Gruppe zweiter Embeddings ($x_i$) abgebildet wird.

5. Verfahren nach einem der vorherigen Ansprüche, **dadurch gekennzeichnet, dass** für ein Wort (306) verschiedene Arten von ersten Embeddings ($e_i$) bestimmt werden (401) wobei die verschiedenen Arten von ersten Embeddings ($e_i$) ein wort-basiertes Embedding, ein buchstaben-basiertes Embedding, ein teilwort-basierte Embedding und/oder ein domänenspezifisches Embedding, insbesondere für eine biomedizinische oder materialwissenschaftliche Domäne, umfassen.

6. Verfahren nach einem der vorherigen Ansprüche, **dadurch gekennzeichnet, dass** die Funktion (308) wenigstens ein erstes Embedding ($e_i$) aus einer Vielzahl erster Embeddings ($e_i$) mit einer Abbildung ($Q$) auf ein zweites Embeddings ($x_i$) vorgegebener Dimension abgebildet (402).

7. Verfahren nach Anspruch 6, **dadurch gekennzeichnet, dass** ein Gewicht ($\alpha_i$) für eine Kombination ($e^{ATT}$) eines zweiten Embeddings ($x_i$) mit wenigstens einem anderen zweiten Embedding abhängig von diesem zweiten Embedding ($x_i$) bestimmt wird (402), wobei die Kombination ($e^{ATT}$) abhängig von dem mit dem Gewicht ($\alpha_i$) gewichteten zweiten Embedding ($x_i$) bestimmt wird.

8. Verfahren nach Anspruch 7, **dadurch gekennzeichnet, dass** die Kombination ($e^{ATT}$) abhängig von einem Produkt des zweiten Embeddings ($x_i$) mit dem Gewicht ($\alpha_i$) bestimmt wird (402).

9. Verfahren nach Anspruch 8, **dadurch gekennzeichnet, dass** für ein Wort (306) eine Vielzahl zweiter Embeddings ($x_i$) bestimmt wird (402), wobei für die Vielzahl zweiter Embeddings ($x_i$) eine Vielzahl Produkte bestimmt wird, wobei die Kombination ($e^{ATT}$) abhängig von einer Summe der Produkte bestimmt wird (402).

10. Verfahren nach einem der Ansprüche 7 bis 9, **dadurch gekennzeichnet, dass** das Gewicht ($\alpha_i$) abhängig von einem Merkmal ($f$), bestimmt wird (402), das eine Eigenschaft des Worts (306) charakterisiert.

11. Verfahren nach einem der Ansprüche 7 bis 10, **dadurch gekennzeichnet, dass** das Gewicht ($\alpha_i$) mit einer Softmax-Funktion auf Werte zwischen 0 und 1 abgebildet wird (401) insbesondere wobei sich Gewichte ($\alpha_i$) für unterschiedliche Embeddings ($x_i$) vorgegebener Dimension für das Wort (306) zu 1 aufsummieren (402).

12. Verfahren nach einem der vorherigen Ansprüche, **dadurch gekennzeichnet, dass** ein Vektor ($e_i$) ein Embedding definiert, wobei unterschiedliche Vektoren ($e_i$) für verschiedene erste Embeddings ($e_i$) für das Wort (306) mit einer Abbildung ($Q$) auf Vektoren ($x_i$) gleicher Dimension abgebildet werden (402).

13. Verfahren nach einem der vorherigen Ansprüche, **dadurch gekennzeichnet, dass** die Funktion (308) das zweite Embedding ($x_i$) mit einem Generator ($G$) bestimmt (402), der durch die Parameter ($\theta_G$) definiert ist.

14. Vorrichtung (100) zur Bestimmung eines Knowledge Graph, **dadurch gekennzeichnet, dass** die Vorrichtung ausgebildet ist, das Verfahren nach einem der Ansprüche 1 bis 13 auszuführen.

15. Computerprogramm, **dadurch gekennzeichnet, dass** das Computerprogramm computerlesbare Instruktionen umfasst bei deren Ausführung durch einen Computer das Verfahren nach einem der Ansprüche 1 bis 13 ausgeführt wird.

Geänderte Patentansprüche gemäss Regel 137(2) EPÜ.

1. Computerimplementiertes Verfahren zur Bestimmung eines Knowledge Graph, der eine Datenbank zur strukturierten Speicherung von Wissen ist, **dadurch gekennzeichnet, dass** für ein erstes Embedding für ein Wort (306) mit einer Funktion (308) ein zweites Embedding ($x_i$) bestimmt wird (402), wobei für das zweite Embedding ($x_i$) mit einem ersten Klassifizierer (C) eine erste Klassifizierung bestimmt wird (403), die definiert, ob das Wort (306) eine Entität für den Knowledge Graph ist oder nicht, oder die definiert welcher Entität oder welchem Typ von Entität für den Knowledge Graph das Wort (306) im Knowledge Graph zuzuordnen ist, wobei diese Entität im Knowledge Graph gespeichert wird, wobei für das zweite Embedding ($x_i$) mit einem zweiten Klassifizierer (D) eine zweite Klassifizierung bestimmt wird (404), die definiert, welchem Typ von Embeddings aus einer Vielzahl von Typen von Embeddings das zweite Embedding ($x_i$) zuzuordnen ist, wobei in einem Training wenigstens ein Parameter ($\theta_G$) für die Funktion (308) abhängig von wenigstens einem Gradienten für das Training des ersten Klassifizierer (C) und abhängig von wenigstens einem Gradienten für das Training des zweiten Klassifizierer (D) trainiert wird.

2. Verfahren nach Anspruch 1, **dadurch gekennzeichnet, dass** für das Training eine Vielzahl von Worten (306) bereitgestellt wird, wobei mit dem ersten Klassifizierer (C) die erste Klassifizierung des zweiten Embeddings ($x_i$) für wenigstens einen Teil der Vielzahl von Worten (306) bestimmt wird, wobei mit dem zweiten Klassifizierer (D) die zweite Klassifizierung des zweiten Embeddings ($x_i$) für den wenigstens einen Teil der Vielzahl von Worten (306) bestimmt wird, wobei abhängig vom wenigstens einen Teil der Vielzahl von Worten (306) Parameter ($\theta_C$) für den ersten Klassifizierer (C) bestimmt werden (403), für die eine erste Funktion ($L_C$) für den ersten Klassifizierer (C) eine erste Bedingung erfüllt, wobei abhängig von diesen Parametern ($\theta_C$) für den ersten Klassifizierer (C) und wenigstens einem Teil der Vielzahl von Worten (306) Parameter ($\theta_D$) für den zweiten Klassifizierer (D) bestimmt werden (404), für die eine zweite Funktion ($L_D$) für den zweiten Klassifizierer (D) eine zweite Bedingung erfüllt, wobei die erste Funktion ($L_C$) abhängig von den Parametern ($\theta_C$) für den ersten Klassifizierer (C) und der ersten Klassifizierung definiert ist, wobei die zweite Funktion ($L_D$) abhängig von den Parametern ($\theta_D$) für den zweiten Klassifizierer (D) und der zweiten Klassifizierung definiert ist.

3. Verfahren nach Anspruch 2, **dadurch gekennzeichnet, dass** die Parameter ($\theta_G$) der Funktion (308) abhängig von einer Differenz zwischen Gradienten für den ersten Klassifizierer (C) und Gradienten für den zweiten Klassifizierer (D) bestimmt werden.

4. Verfahren nach einem der vorherigen Ansprüche, **dadurch gekennzeichnet, dass** eine Vielzahl der zweiten Embeddings ($x_i$) bestimmt wird (402), wobei für jedes Wort (306) aus einer Vielzahl unterschiedlicher Worte eine Gruppe mit verschiedenen ersten Embeddings ($e_i$) bestimmt wird (401) und diese Gruppe auf eine Gruppe zweiter Embeddings ($x_i$) abgebildet wird.

5. Verfahren nach einem der vorherigen Ansprüche, **dadurch gekennzeichnet, dass** für ein Wort (306) verschiedene Arten von ersten Embeddings ($e_i$) bestimmt werden (401) wobei die verschiedenen Arten von ersten Embeddings ($e_i$) ein wort-basiertes Embedding, ein buchstaben-basiertes Embedding, ein teilwort-basierte Embedding und/oder ein domänenspezifisches Embedding, insbesondere für eine biomedizinische oder materialwissenschaftliche Domäne, umfassen.

6. Verfahren nach einem der vorherigen Ansprüche, **dadurch gekennzeichnet, dass** die Funktion (308) wenigstens ein erstes Embedding ($e_i$) aus einer Vielzahl erster Embeddings ($e_i$) mit einer Abbildung (Q) auf ein zweites Embeddings ($x_i$) vorgegebener Dimension abgebildet (402).

7. Verfahren nach Anspruch 6, **dadurch gekennzeichnet, dass** ein Gewicht ($\alpha_i$) für eine Kombination ($e^{ATT}$) eines zweiten Embeddings ($x_i$) mit wenigstens einem anderen zweiten Embedding abhängig von diesem zweiten Embedding ($x_i$) bestimmt wird (402), wobei die Kombination ($e^{ATT}$) abhängig von dem mit dem Gewicht ($\alpha_i$) gewichteten zweiten Embedding ($x_i$) bestimmt wird.

8. Verfahren nach Anspruch 7, **dadurch gekennzeichnet, dass** die Kombination ($e^{ATT}$) abhängig von einem Produkt des zweiten Embeddings ($x_i$) mit dem Gewicht ($\alpha_i$) bestimmt wird (402).

9. Verfahren nach Anspruch 8, **dadurch gekennzeichnet, dass** für ein Wort (306) eine Vielzahl zweiter Embeddings ($x_i$) bestimmt wird (402), wobei für die Vielzahl zweiter Embeddings ($x_i$) eine Vielzahl Produkte bestimmt wird, wobei die Kombination ($e^{ATT}$) abhängig von einer Summe der Produkte bestimmt wird (402).

10. Verfahren nach einem der Ansprüche 7 bis 9, **dadurch gekennzeichnet, dass** das Gewicht ($\alpha_i$) abhängig von einem Merkmal (f), bestimmt wird (402), das eine Eigenschaft des Worts (306) charakterisiert.

11. Verfahren nach einem der Ansprüche 7 bis 10, **dadurch gekennzeichnet, dass** das Gewicht ($\alpha_i$) mit einer Softmax-Funktion auf Werte zwischen 0 und 1 abgebildet wird (401) insbesondere wobei sich Gewichte ($\alpha_i$) für unterschiedliche Embeddings ($x_i$) vorgegebener Dimension für das Wort (306) zu 1 aufsummieren (402).

12. Verfahren nach einem der vorherigen Ansprüche, **dadurch gekennzeichnet, dass** ein Vektor ($e_i$) ein Embedding definiert, wobei unterschiedliche Vektoren ($e_i$) für verschiedene erste Embeddings ($e_i$) für das Wort (306) mit einer Abbildung (Q) auf Vektoren ($x_i$) gleicher Dimension abgebildet werden (402).

13. Verfahren nach einem der vorherigen Ansprüche, **dadurch gekennzeichnet, dass** die Funktion (308) das zweite Embedding ($x_i$) mit einem Generator (G) bestimmt (402), der durch die Parameter ($\theta_G$) definiert ist.

14. Vorrichtung (100) zur Bestimmung eines Knowledge Graph, **dadurch gekennzeichnet, dass** die Vorrichtung ausgebildet ist, das Verfahren nach einem der Ansprüche 1 bis 13 auszuführen.

15. Computerprogramm, **dadurch gekennzeichnet, dass** das Computerprogramm computerlesbare Instruktionen umfasst bei deren Ausführung durch einen Computer das Verfahren nach einem der Ansprüche 1 bis 13 ausgeführt wird.

100

106

110

102

112

108

104

**Fig. 1**

202

204

$x_i$

206

208

210

**Fig. 2**

Fig. 3

Fig. 4

**Europäisches Patentamt**
**European Patent Office**
**Office européen des brevets**

# EUROPÄISCHER RECHERCHENBERICHT

Nummer der Anmeldung

EP 20 17 2432

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HUNG NGHIEP TRAN ET AL: "Analyzing Knowledge Graph Embedding Methods from a Multi-Embedding Interaction Perspective", ARXIV.ORG, CORNELL UNIVERSITY LIBRARY, 201 OLIN LIBRARY CORNELL UNIVERSITY ITHACA, NY 14853, 27. März 2019 (2019-03-27), XP081161150, * Seite 1, rechte Spalte, Absatz 2 - Absatz 3 * * Abschnitt 3.3 * | 1-15 | INV. G06F40/295 |
| A | CN 111 046 185 A (UNIV CHONGQING POSTS & TELECOM) 21. April 2020 (2020-04-21) * Ansprüche * | 1-15 | |
| A | CN 107 665 252 A (SHENZHEN SECURITY INFORMATION CO LTD) 6. Februar 2018 (2018-02-06) * Ansprüche * | 1-15 | |
| A,D | BENJAMIN HEINZERLING ET AL: "BPEmb: Tokenization-free Pre-trained Subword Embeddings in 275 Languages", ARXIV.ORG, CORNELL UNIVERSITY LIBRARY, 201 OLIN LIBRARY CORNELL UNIVERSITY ITHACA, NY 14853, 5. Oktober 2017 (2017-10-05), XP080826508, * Zusammenfassung * | 1-15 | RECHERCHIERTE SACHGEBIETE (IPC) G06F G06N |

Der vorliegende Recherchenbericht wurde für alle Patentansprüche erstellt

| Recherchenort | Abschlußdatum der Recherche | Prüfer |
|---|---|---|
| Berlin | 15. Oktober 2020 | Abram, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 17 2432

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2020

| Im Recherchenbericht angeführtes Patentdokument | Datum der Veröffentlichung | Mitglied(er) der Patentfamilie | Datum der Veröffentlichung |
|---|---|---|---|
| CN 111046185 A | 21-04-2020 | KEINE | |
| CN 107665252 A | 06-02-2018 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **YAROSLAV GANIN ; EVGENIYA USTINOVA ; HANA AJAKAN ; PASCAL GERMAIN ; HUGO LAROCHELLE ; FRANCOIS LAVIOLETTE ; MARIO MARCHAND ; VICTOR LEMPITSKY.** Domain-adversarial training of neural networks. *Journal of Machine Learning Research,* 2016, vol. 17
- **SEPP HOCHREITER ; JÜRGEN SCHMIDHUBER.** Long short-term memory. *Neural computation,* 1997, vol. 9 (8), 1735-1780
- Conditional random fields: Probabilistic models for segmenting and labeling sequence data. **JOHN D. LAFFERTY ; ANDREW MCCALLUM ; FERNANDO C. N. PEREIRA.** Proceedings of the Eighteenth International Conference on Machine Learning, ICML'01. Morgan Kaufmann Publishers Inc, 2001, 282-289
- **GUILLAUME LAMPLE ; MIGUEL BALLESTEROS ; SANDEEP SUBRAMANIAN ; KAZUYA KAWAKAMI ; CHRIS DYER.** Neural architectures for named entity recognition. *Proc. of NAACL,* 2016

- **JACOB DEVLIN ; MING-WEI CHANG ; KENTON LEE ; KRISTINA TOUTANOVA.** BERT: Pre-training of deep bidirectional transformers for language understanding. *Proceedings of the 2019 Conference of the North American Chapter of the Association for Computational Linguistics: Human Language Technologies,* 2019, 4171-4186
- **ALAN AKBIK ; DUNCAN BLYTHE ; ROLAND VOLLGRAF.** Contextual string embeddings for sequence labeling. *Proceedings of the 27th International Conference on Computational Linguistics,* 2018, 1638-1649
- **ALAN AKBIK ; TANJA BERGMANN ; ROLAND VOLLGRAF.** Pooled contextualized embeddings for named entity recognition. *Proceedings of the 2019 Conference of the North American Chapter of the Association for Computational Linguistics: Human Language Technologies,* 2019, 724-728